# EUROPÄISCHE PATENTSCHRIFT

(11) **EP 1 148 262 B1**
(45) Veröffentlichungstag und Bekanntmachung des Hinweises auf die Patenterteilung: **04.08.2004**
(21) Anmeldenummer: 01106624.8
(22) Anmeldetag: 16.03.2001
(51) Int. Cl.: F16C 29/06

(54) **Linearwälzlager**
Linear rolling bearing
Palier à roulement linéaire

(30) Priorität: 22.04.2000 DE 10020115; 09.02.2001 DE 10106038
(43) Veröffentlichungstag der Anmeldung: 24.10.2001
(73) Patentinhaber: INA-Schaeffler KG, 91074 Herzogenaurach (DE)
(72) Erfinder: Wiehl, Hermann, 91074 Herzogenaurach (DE)

(56) Entgegenhaltungen:
- EP-A- 0 353 396
- DE-A- 3 533 403
- DE-U- 9 313 728
- FR-A- 1 037 175
- FR-A- 2 612 580
- FR-A- 2 615 917
- US-A- 5 106 206

## Beschreibung

Die Erfindung betrifft ein Linearwälzlager mit einer Führungsschiene und einem diese umgebenden Führungswagen, welcher über Reihen von Kugeln an der Führungsschiene längsverschieblich abgestützt ist und einen Tragkörper enthält, in welchem für jede Kugelreihe ein auf der Länge des Tragkörpers sich erstreckendes, mit einer geradlinigen Kugellaufbahn versehenes Füllstück angeordnet ist, welches mit Ausnahme des Bereichs der Kugellaufbahn vollständig von dem Werkstoff des Tragkörpers umgeben ist, wobei die Reihen von Kugeln in dem Führungswagen Teile von endlosen Kugelumläufen sind und das Wälzlager zwei an dem Tragkörper stirnseitig befestigte, in die Verschiebungsrichtungen weisende Umlenkkörper mit Umlenkkanälen für jeden Kugelumlauf enthält, und mit Rücklaufkanälen für die Kugeln, wobei ferner an der stirnseitigen Enden jeweils eines der Füllstükke zwei in die Umlenkkörper hineinragende, die Umlenkkanäle begrenzende Umlenkstücke angeordnet sind.

### Hintergrund der Erfindung

Mit einem solchen Lager werden bewegliche Teile, beispielsweise Werkzeuge einer Werkzeugmaschine, an einem festen Maschinenteil entlanggeführt. Aus der Druckschrift EP 0 558 761 B1 ist ein Linearwälzlager bekannt, welches für zwei Reihen von Kugeln eine gemeinsame dünne Kugelplatte mit zwei Lastkugelrillen enthält. Die Kugelplatte ist in dem Formwerkstoff des Tragkörpers des Führungswagens so eingebettet, dass sich die Kugelrillen an einer von dem Formwerkstoff abgewandten freien Oberfläche der Kugelplatte befinden. Daher werden hier die Kugeln nicht in dem Führungswagen gehalten, wenn dieser von der Führungsschiene abgelöst wird. Die Kugeln fallen dann aus den Kugelrillen der Kugelplatte und somit aus dem Führungswagen heraus. Außerdem hat diese Ausführung den Nachteil hoher Härtekosten.

Aus der Druckschrift JP 58-102 822 A ist ein Linearwälzlager der eingangs genannten Art bekannt. Die bei diesem Lager verwendeten Füllstücke mit den Kugellaufbahnen für tragende Kugeln haben so große Abmessungen, dass sie zusätzlich Kugelrücklaufkanäle enthalten können. Daher ragen die an ihnen stirnseitig angeordneten Umlenkstücke radial nicht über das Füllstück-Querschnittsmaß hinaus, so dass ein stirnseitiges Einstecken eines solchen Füllstücks in den zugehörigen Aufnahmeraum des Tragkörpers problemlos durchführbar ist. Infolge des großen Volumens dieses Füllstücks, welches wegen der Kugellaufbahn aus hartem verschleißfesten Material bestehen muss, ergibt sich hier aber eine teuere Ausführung.

### Zusammenfassung der Erfindung

Der Erfindung liegt die Aufgabe zu Grunde, ein preiswertes, leicht montierbares Linearwälzlager mit spanlos hergestellten Bauteilen zu schaffen, bei welchem die Kugeln in dem Führungswagen auch dann sicher gehalten werden, wenn dieser nicht auf die Führungsschiene aufgeschoben ist.

Diese Aufgabe wird erfindungsgemäß dadurch gelöst, dass das jeweilige Füllstück längs einer mittleren Trennfuge in zwei Teile aufgeteilt ist. Dadurch kann jeweils eine Füllstückhälfte, an der bereits das Umlenkstück angebracht ist, durch stirnseitiges Einstecken in einfacher Weise an dem Tragkörper montiert werden. Der Tragkörper kann jeweils einen der Kugelrille des Füllstücks benachbarten Kanal für tragende Kugeln aufweisen, welcher zu der Führungsschiene hin über einen Schlitz des Tragkörpers mit einer gegenüber dem Kugeldurchmesser geringeren Breite geöffnet ist. Auf diese Weise sind das Füllstück und der Kanal vollständig in dem Führungswagens angeordnet. Die Kugeln werden dadurch in dem Werkstoff des Führungswagens gehalten und ragen nur durch den Schlitz zu der Führungsschiene hin durch.

Der Tragkörper kann aus einem Formwerkstoff wie Kunststoff oder Druckgusslegierung gebildet sein, während die beiden Teile des Füllstücks aus einem harten Werkstoff wie Stahl gebildet sein können.

Die beiden Teile des Füllstücks können als Laufbahnstäbe oder als Laufbahnrohre ausgebildet sein. Jedes Umlenkstück kann als halbkreisförmige Umlenkscheibe ausgebildet sein und einen Steckzapfen aufweisen, der in eine stimseitige Ausnehmung eines Füllstückteils passend eingesteckt ist.

Die Umlenkkörper können ebenfalls aus einem Formwerkstoff wie Kunststoff oder Druckgusslegierung gebildet sein. Sie können mit Schrauben an dem Tragkörper befestigt sein. Es ist aber auch möglich, sie jeweils mit Schnappvorrichtungen an dem Tragkörper zu befestigen.

Das erfindungsgemäße Linearwälzlager kann so gestaltet sein, dass bis auf das profilierte Füllstück alle anderen Teile aus dem Formwerkstoff bestehen. Das als Laufbahnrohr oder Laufbahnstab ausgebildete Füllstück kann jeweils als Ziehteil aus Stahl hergestellt sein. Die Herstellung eines Rohres mit einer Kugellaufbahn ist weniger aufwendig als diejenige eines entsprechenden Stabes. Die erfindungsgemäße Lösung ermöglicht eine einfache Montage der einzelnen Teile, wobei diese in einfacher Weise zueinander zentriert angeordnet werden können. Die Umlenkscheiben lassen sich mit den jeweils angeformten Steckzapfen in einfacher Weise stirnseitig in die Rohrteile des Füllstücks stekken. Es braucht somit nur eine Art von Füllstückhälften hergestellt zu werden. Zwei solche Hälften lassen sich in einfacher Weise an den beiden Stirnseiten des Tragkörpers in diesen einstecken und bilden dann gemeinsam ein eingebautes Füllstück. Entsprechendes gilt für stabförmige Füllstückhälften mit angebrachten Umlenkscheiben. Der Tragkörper des Führungswagens kann auch aus Aluminium durch Strangpressen hergestellt werden.

### Kurze Beschreibung der Zeichnung

Ausführungsbeispiele der Erfindung sind in der Zeichnung dargestellt und werden im folgenden näher beschrieben. Es zeigen:
- Figur 1: ein erfindungsgemäßes Linearwälzlager in einem Querschnitt gemäß Linie I-I der Figur 2;
- Figur 2: den Führungswagen des Linearwälzlagers nach Figur 1 in der Draufsicht;
- Figur 3: ein als Laufbahnrohr ausgebildetes Füllstück in der Draufsicht;
- Figur 4: das Füllstück nach Figur 3 in der Seitenansicht;
- Figur 5: ein Teil des Füllstücks in einer stimseitigen Ansicht gemäß Linie V-V der Figur 3;
- Figur 6: einen vergrößerten Ausschnitt aus einem gegenüber Figur 2 abgewandelten Führungswagen;
- Figur 7: ein als Laufbahnstab ausgebildetes Füllstück in der Draufsicht;
- Figur 8: das Füllstück nach Figur 7 in einem Querschnitt gemäß Linie VIII-VIII der Figur 7;
- Figur 9: eine Teildarstellung eines weiteren als Laufbahnrohr ausgebildeten Füllstücks;
- Figur 10: einen Querschnitt durch das Füllstück gemäß Linie X-X der Figur 9.

### Ausführliche Beschreibung der Zeichnung

Bei einem erfindungsgemäßen Linearwälzlager wird eine Führungsschiene 1 von einem Führungswagen 2 teilweise umgeben. Dieser stützt sich über Kugeln 3 zweier endloser Kugelumläufe an den beiden Längsseiten der Führungsschiene 1 ab.

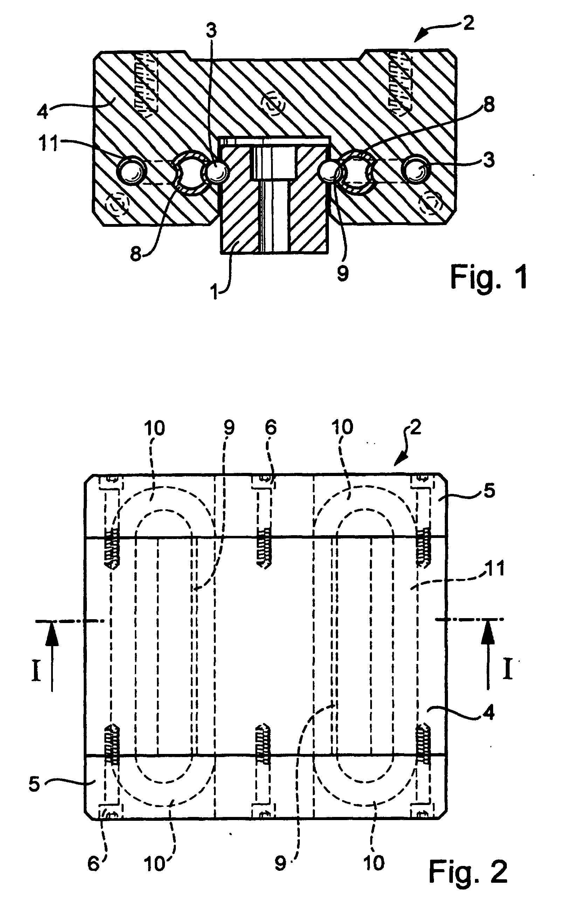

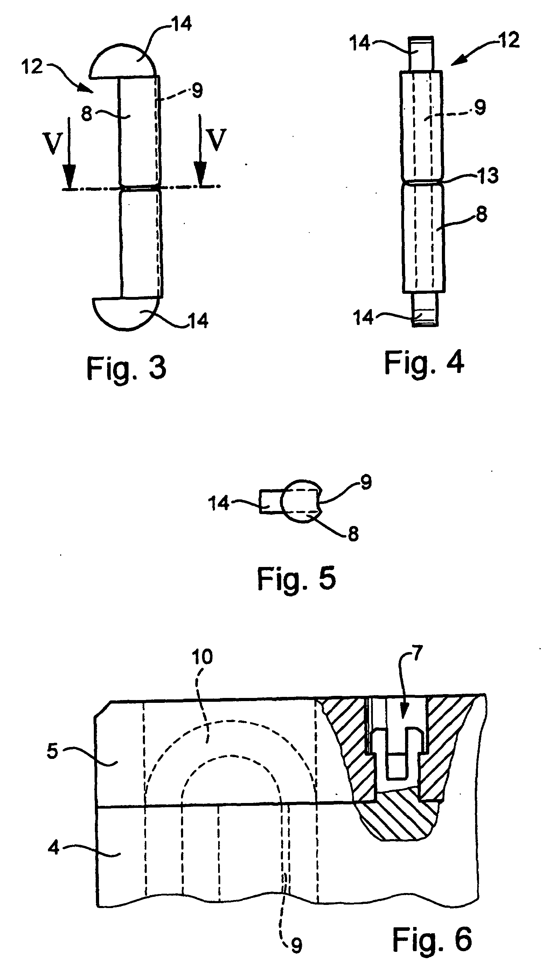

Der Führungswagen 2 besteht im wesentlichen aus einem mittleren Tragkörper 4 und zwei an dessen beiden Stirnseiten angeordneten Umlenkkörpern 5. Gemäß Figur 2 sind die beiden Umlenkkörper 5 mit Schrauben 6 an dem Tragkörper 4 lösbar befestigt. Gemäß Figur 6 weisen der Tragkörper 4 und der jeweils anliegende Umlenkkörper 5 gemeinsame Schnappvorrichtungen 7 auf, mit welchen der Umlenkkörper 5 an dem Tragkörper 4 lösbar befestigt ist. Hier ist die Montage insofern gegenüber der Ausführung nach Figur 2 vereinfacht, als der Umlenkkörper 5 nur noch an den Tragkörper 4 herangedrückt zu werden braucht, bis die Schnappvorrichtungen 7 wirksam werden.

Der Tragkörper 4 und die Umlenkkörper 5 bestehen aus einem Formwerkstoff, in welchem die Kugelumläufe eingebettet sind. So weist der Tragkörper 4 als Füllstücke zwei Laufbahnrohre 8 mit Kugellaufbahnen 9 für tragende Kugeln 3 auf. Die Laufbahnrohre 8 sind daher zu beiden Seiten der Führungsschiene 1 in dem Tragkörper 4 eingebettet. Die Kugeln 3 können damit sowohl an Laufbahnen der Führungsschiene 1 als auch an den Kugellaufbahnen 9 der Laufbahnrohre 8 abrollen.

An den in die Verschiebungsrichtung weisenden Stirnseiten des Tragkörpers 4 gehen die Kugellaufbahnen 9 in Umlenkkanäle 10 über, welche innerhalb der Umlenkkörper 5 angeordnet sind. In diesen Umlenkkanälen 10 werden die Kugeln 3 aus der jeweiligen Kugellaufbahn 9 in einen zugehörigen Rücklaufkanal 11 des Tragkörpers 4 eingeleitet. Während der Führungswagen 2 an der Führungsschiene 1 entlangfährt, rollen somit die Kugeln 3 an den Kugellaufbahnen 9 entlang bis zu dem jeweiligen stirnseitigen Ende des Tragkörpers 4 und von dort über die Umlenkkanäle 10 in die zugehörigen Rücklaufkanäle 11 hinein, anschließend durch diese hindurch und über die Umlenkkanäle 10 des anderen Umlenkkörpers 5 wieder in die Kugellaufbahnen 9 des Tragkörpers 4.

Das Laufbahnrohr 8 ist als zweiteiliges Füllstück 12 ausgebildet, welches in der Mitte eine Trennfuge 13 aufweist. An den beiden Längsenden des Füllstücks 12 grenzen zwei halbkreisförmige Umlenkscheiben 14 an dem Laufbahnrohr 8 an. Jede Umlenkscheibe 14 begrenzt den zugehörigen Umlenkkanal 10 innerhalb des benachbarten Umlenkkörpers 5. Sie ist in den Figuren 2 bis 6 mit der zugehörigen Hälfte des Laufbahnrohres 8 unlösbar verbunden.

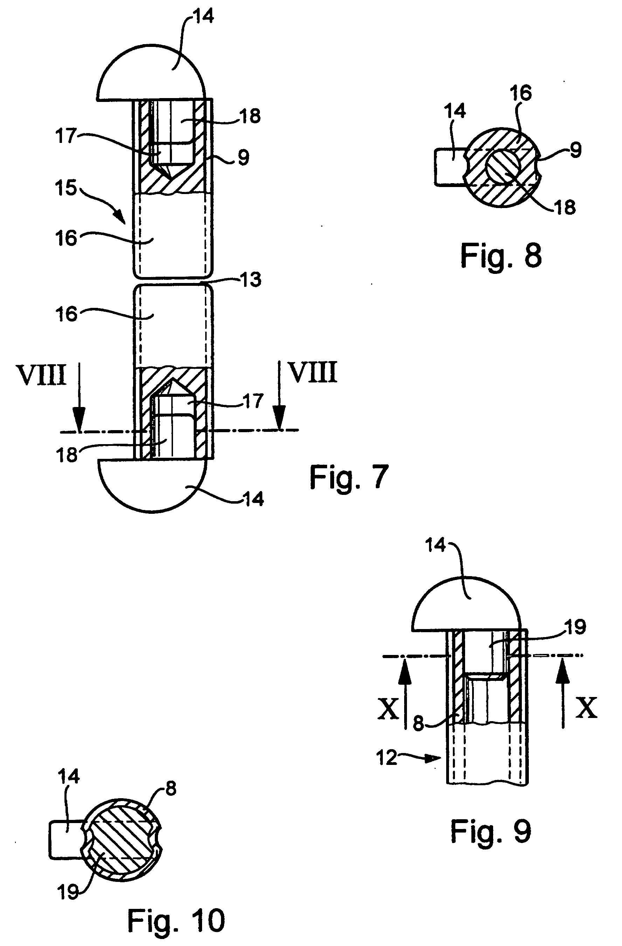

Das zweiteilige Füllstück 15 nach den Figuren 7 und 8 besteht aus einem längs seiner Trennfuge 13 geteilten Laufbahnstab 16, welcher stirnseitige Ausnehmungen 17 aufweist. Hier sind die halbkreisförmigen Umlenkscheiben 14 mit angeformten Steckzapfen 18 versehen, die passend in die Ausnehmungen 17 eingesteckt sind. Damit ist eine lösbare Verbindung zwischen jedem Teil des Füllstücks 15 und der zugehörigen Umlenkscheibe 14 geschaffen.

Eine solche Verbindung eignet sich auch für die beiden Teile des als Laufbahnrohr 8 ausgebildeten Füllstücks 12 und die zugehörigen Umlenkscheiben 14, wie die Figuren 9 und 10 zeigen. Hier ist der Steckzapfen 19 der jeweiligen Umlenkscheibe 14 passend in das Laufbahnrohr 8 eingesteckt.

### Bezugszahlenliste

- 1: Führungsschiene
- 2: Führungswagen
- 3: Kugel
- 4: Tragkörper
- 5: Umlenkkörper
- 6: Schraube
- 7: Schnappvorrichtung
- 8: Laufbahnrohr
- 9: Kugellaufbahn
- 10: Umlenkkanal
- 11: Rücklaufkanal
- 12: Füllstück
- 13: Trennfuge
- 14: Umlenkscheibe
- 15: Füllstück
- 16: Laufbahnstab
- 17: Ausnehmung
- 18: Steckzapfen
- 19: Steckzapfen

## Patentansprüche

1. Linearwälzlager mit einer Führungsschiene (1) und einem diese umgebenden Führungswagen (2), welcher über Reihen von Kugeln (3) an der Führungsschiene (1) längsverschieblich abgestützt ist und einen Tragkörper (4) enthält, in welchem für jede Kugelreihe ein auf der Länge des Tragkörpers (4) sich erstreckendes, mit einer geradlinigen Kugellaufbahn (9) versehenes Füllstück (12, 15) angeordnet ist, welches mit Ausnahme des Bereichs der Kugellaufbahn (9) vollständig von dem Werkstoff des Tragkörpers (4) umgeben ist, wobei die Reihen von Kugeln (3) in dem Führungswagen (2) Teile von endlosen Kugelumläufen sind und das Wälzlager zwei an dem Tragkörper (4) stirnseitig befestigte, in die Verschiebungsrichtungen weisende Umlenkkörper (5) mit Umlenkkanälen (10) für jeden Kugelumlauf enthält, und mit Rücklaufkanälen (11) für die Kugeln (3), wobei ferner an den stirnseitigen Enden jeweils eines der Füllstücke (12, 15) zwei in die Umlenkkörper (5) hineinragende, die Umlenkkanäle (10) begrenzende Umlenkstücke angeordnet sind, **dadurch gekennzeichnet, dass** das jeweilige Füllstück (12, 15) längs einer mittleren Trennfuge (13) in zwei Teile aufgeteilt ist und daß die Rücklaufkanäle (11) für die Kugeln (3) in dem Tragkörper (4) angeordnet sind.

2. Lager nach Anspruch 1, **dadurch gekennzeichnet, dass** der Tragkörper (4) jeweils einen der Kugelrille jedes Füllstücks (12, 15) benachbarten Kanal für tragende Kugeln (3) aufweist, welcher zu der Führungsschiene (1) hin über einen Schlitz des Tragkörpers (4) mit einer gegenüber dem Kugeldurchmesser geringeren Breite geöffnet ist.

3. Lager nach Anspruch 1, **dadurch gekennzeichnet, dass** der Tragkörper (4) aus einem Formwerkstoff wie Kunststoff oder Druckgußlegierung gebildet ist, während die beiden Teile des Füllstücks (12, 15) aus einem harten Werkstoff wie Stahl gebildet sind.

4. Lager nach Anspruch 1, **dadurch gekennzeichnet, dass** die beiden Teile des Füllstücks (15) als Laufbahnstäbe (16) ausgebildet sind.

5. Lager nach Anspruch 1, **dadurch gekennzeichnet, dass** die beiden Teile des Füllstücks (12) als Laufbahnrohre (8) ausgebildet sind.

6. Lager nach Anspruch 1, **dadurch gekennzeichnet, dass** jedes Umlenkstück als halbkreisförmige Umlenkscheibe (14) ausgebildet ist und einen Steckzapfen (18, 19) aufweist, der in eine stirnseitige Ausnehmung (17) eines Füllstückteils passend eingesteckt ist.

7. Lager nach Anspruch 1 **dadurch gekennzeichnet, dass** die Umlenkkörper (5) aus einem Formwerkstoff wie Kunststoff oder Druckgußlegierung gebildet sind.

8. Lager nach Anspruch 1 **dadurch gekennzeichnet, dass** die Umlenkkörper (5) mit Schrauben (6) an dem Tragkörper (4) befestigt sind.

9. Lager nach Anspruch 1 **dadurch gekennzeichnet, dass** die Umlenkkörper (5) mit Schnappvorrichtungen (7) an dem Tragkörper (4) befestigt sind.

## Claims

1. Linear rolling bearing having a guide rail (1) and a guide carriage (2) surrounding this while being supported for longitudinal displacement on the guide rail (1) through a row of balls (3) and comprising a carrier body (4) in which is arranged, for each row of balls, a filling piece (12, 15) that extends over the length of the carrier body (4) and comprises a straight ball raceway (9), said filling piece (12, 15), with the exception of the region of the ball raceway (9), being completely surrounded by the material of the carrier body (4), the rows of balls (3) in the guide carriage (2) forming parts of endless ball circuits and the rolling bearing comprising, for each ball circuit, two deflecting bodies (5) oriented in the directions of displacement and fixed on front ends of the carrier body (4), said deflecting bodies (5) comprising deflecting channels (10) for each ball circuit, the rolling bearing further comprising return channels (11) for the balls (3), and two deflecting pieces that project into the deflecting bodies (5) and delimit the deflecting channels (10) being arranged on the front ends of each filling piece (12, 15), **characterised in that** each filling piece (12, 15) is divided into two parts along a central parting line (13), and the return channels (11) for the balls (3) are arranged in the carrier body (4).

2. Bearing according to claim 1, **characterised in that** the carrier body (4) comprises a channel for load-bearing balls (3) which is arranged adjacent a respective ball groove of each filling piece (12, 15) and is open toward the guide rail (2) through a slit of the carrier body (4), the width of said slit being smaller than the ball diameter.

3. Bearing according to claim 1, **characterised in that** the carrier body (4) is made of a moulding material such as a plastic or a die-casting alloy, while the two parts of the filling piece (12, 15) are made of a hard material such as steel.

4. Bearing according to claim 1, **characterised in that** the two parts of the filling piece (15) are configured as raceway bars (16).

5. Bearing according to claim 1, **characterised in that** the two parts of the filling piece (12) are configured as raceway tubes (8).

6. Bearing according to claim 1, **characterised in that** each deflecting piece is configured as a semi-circular deflecting disk (14) and comprises a plug-in pin (18, 19) that is fit into a front recess (17) of a filling piece part.

7. Bearing according to claim 1, **characterised in that** the deflecting bodies (5) are made of a moulding material such a plastic or a die-casting alloy.

8. Bearing according to claim 1, **characterised in that** the deflecting bodies (5) are fixed to the carrier body (4) with screws (6).

9. Bearing according to claim 1, **characterised in that** the deflecting bodies (5) are fixed to the carrier body (4) by snap devices (7).

## Revendications

1. Roulement linéaire ayant un rail de guidage (1 ) et un chariot de guidage (2) qui entoure le rail de guidage (1) en y étant supporté en déplacement longitudinal par l'intermédiaire de rangées de billes (3), ledit chariot de guidage (2) comprenant un corps de support (4) dans lequel est agencé, pour chaque rangée de billes (3), une pièce de remplissage ((12, 15) qui s'étend le long du corps de support (4) et comprend une piste (9) rectiligne de roulement de billes, ladite pièce de remplissage (12, 15) étant entourée, à l'exception de la région de la piste (9) de roulement de billes, par le matériau du corps de support (4), les rangées de billes (3) dans le chariot de guidage (2) faisant partie de circulations sans fin de billes et le roulement comprenant deux corps de renvoi (5) orientés dans les sens de déplacement et fixés sur les côtés frontaux du corps de support (4) en comprenant des canaux de renvoi (10) pour chaque circulation de billes, ledit roulement comprenant, en plus, des canaux de retour (11) pour les billes (3), et, sur les extrémités frontales de chaque pièce de remplissage (12, 15) sont agencées deux pièces de renvoi qui font saillie dans les corps de renvoi (5) et délimitent les canaux de renvoi (10), **caractérisé en ce que** la pièce de remplissage (12, 15) est divisée en deux parties le long d'une ligne centrale de séparation (13), et les canaux de retour (11) pour les billes (3) sont agencés dans le corps de support (4).

2. Roulement selon la revendication 1, **caractérisé en ce que** le corps de support (4) comprend un canal pour des billes (3) sous charge avoisinant la rainure de billes de chaque pièce de remplissage (12, 15), ledit canal étant ouvert vers le rail de guidage (1) par une ouverture du corps de support (4) ayant une largeur inférieure au diamètre des billes.

3. Roulement selon la revendication 1, **caractérisé en ce que** le corps de support (4) est formé à partir d'une matière de moulage telle qu'une matière plastique ou un alliage de moulage sous pression, pendant que les deux parties de la pièce de remplissage (12, 15) sont faites en une matière dure tel que l'acier.

4. Roulement selon la revendication 1, **caractérisé en ce que** les deux parties de la pièce de remplissage (15) sont configurées sous la forme de barres (16) à piste de roulement.

5. Roulement selon la revendication 1, **caractérisé en ce que** les deux parties de la pièce de remplissage (12) sont configurées sous la forme de tuyaux (8) à piste de roulement.

6. Roulement selon la revendication 1, **caractérisé en ce que** chaque pièce de renvoi est configurée sous la forme d'un disque semi-circulaire de renvoi (14) et comprend une goupille enfichable (18, 19) qui est insérée de manière ajustée dans un évidement frontal (17) d'une partie de la pièce de remplissage.

7. Roulement selon la revendication 1, **caractérisé en ce que** les corps de renvoi (5) sont formés en une matière de moulage telle qu'une matière plastique ou un alliage de moulage sous pression.

8. Roulement selon la revendication 1, **caractérisé en ce que** les corps de renvoi (5) sont fixés sur le corps de support (4) par des vis (6).

9. Roulement selon la revendication 1, **caractérisé en ce que** les corps de renvoi (5) sont fixés sur le corps de support (4) par des dispositifs d'encliquetage (7).
